# EUROPEAN PATENT APPLICATION

(11) **EP 4 733 770 A1**
(43) Date of publication of application: **29.04.2026**
(21) Application number: 24825589.5
(22) Date of filing: 10.05.2024
(51) Int. Cl.: G01N 35/10

(54) **AUTOMATIC ANALYSIS DEVICE AND WASHING METHOD FOR DISPENSING PROBE**

(30) Priority: 20.06.2023 JP 2023100680
(71) Applicant: HITACHI HIGH-TECH CORPORATION, Tokyo 105-6409 (JP)
(72) Inventor: NOJIMA Akihiro, Tokyo 100-8280 (JP); MORI Takamichi, Tokyo 105-6409 (JP)
(74) Representative: MERH-IP Matias Erny Reichl Hoffmann Patentanwälte PartG mbB
(86) International application number: PCT/JP2024/017526
(87) International publication number: WO 2024/262180

(57) **Abstract**

An inner surface of a dispensing probe is efficiently washed with a heated washing liquid by suppressing heat dissipation of the heated washing liquid. An automatic analysis device includes a dispensing probe, a special washing tank 27 for supplying a heated washing liquid 307, a syringe pump 205 that aspirates a sample 303 and the heated washing liquid 307 into the dispensing probe, and a control unit that controls an operation of the syringe pump 205. When aspirating the sample 303 into the dispensing probe, the control unit causes the syringe pump 205 to aspirate the segmenting air 301 into the dispensing probe, aspirate the sample 303 following the segmenting air 301, and when aspirating the heated washing liquid 307 into the dispensing probe, aspirate the segmenting air 306 larger in amount than the segmenting air 301 into the dispensing probe and aspirate the heated washing liquid 307 following the segmenting air 306.

## Description

### Technical Field

The present disclosure relates to an automatic analysis device and a washing method for a dispensing probe.

### Background Art

Automatic analysis devices are widely used in clinical chemical analysis for analyzing components such as inorganic ions, proteins, urea, sugars, lipids, enzymes, hormones, drugs, and tumor markers in biological samples such as blood and urine. The automatic analysis devices excluding devices using a disposable chip adopt a method in which a sample dispensing probe and a reagent dispensing probe are washed by a washing mechanism and repeatedly used. At this time, a known washing method for a dispensing probe is a method with which the inner surface of the dispensing probe is washed by passing a washing liquid such as pure water therethrough, and the outer surface is washed by injecting a washing liquid such as pure water. Further, at the end of one day of the analysis, it is conceivable to improve the washing effect using a physicochemical force in combination during the washing with a washing liquid. Examples of the washing include washing by physical impact with ultrasonic waves and chemical washing by a heated washing liquid. In order to ensure the dispensing reliability of the dispensing probe, it is important to wash the inner surface of the dispensing probe.

PTL 1 discloses "Biochemical analyzer including a dispensing nozzle for sampling a reagent or serum, and an ultrasonic washing device that washes the dispensing nozzle".

### Citation List

### Patent Literature

PTL 1: JP H4-169850 A

### Summary of Invention

### Technical Problem

However, in a case where a dispensing probe, particularly the inner surface of the dispensing probe is washed with a heated washing liquid, the aspirated washing liquid dissipates heat inside the dispensing probe when the heated washing liquid is aspirated by the dispensing probe. Thus, the temperature of the washing liquid drops. As a result, a desired washing effect may not be obtained.

Therefore, an object of the present disclosure is to efficiently wash the inner surface of the dispensing probe with a heated washing liquid by suppressing heat dissipation of the heated washing liquid.

### Solution to Problem

An automatic analysis device of the present disclosure includes a dispensing probe configured to aspirate a liquid, a washing tank configured to supply a heated washing liquid, a pump configured to aspirate the liquid and the heated washing liquid into the dispensing probe, and a control unit that controls an operation of the pump, wherein the control unit causes the pump to aspirate first segmenting air into the dispensing probe when aspirating the liquid into the dispensing probe, the first segmenting air segmenting a system liquid filled in the dispensing probe and the liquid, and aspirate the liquid into the dispensing probe following the first segmenting air, and aspirate second segmenting air into the dispensing probe when aspirating the heated washing liquid into the dispensing probe, the second segmenting air being larger in amount than the first segmenting air, the second segmenting air segmenting the system liquid filled in the dispensing probe and the heated washing liquid, and aspirate the heated washing liquid into the dispensing probe following the second segmenting air.

Further, a washing method for a dispensing probe of the present disclosure includes filling a dispensing probe for aspirating a liquid with a system liquid, aspirating first segmenting air into the dispensing probe, the first segmenting air segmenting the system liquid filled in the dispensing probe and the liquid, aspirating the liquid into the dispensing probe following the first segmenting air, discharging the liquid in the dispensing probe, aspirating second segmenting air into the dispensing probe, the second segmenting air being larger in amount than the first segmenting air, the second segmenting air segmenting the system liquid filled in the dispensing probe and a heated washing liquid, and aspirating the heated washing liquid into the dispensing probe following the second segmenting air.

### Advantageous Effects of Invention

According to the present disclosure, an inner surface of a dispensing probe can be efficiently washed with a heated washing liquid by suppressing heat dissipation of the heated washing liquid. Problems, configurations, and effects other than those described above will be clarified by the following description of embodiments.

### Brief Description of Drawings

[FIG. 1] FIG. 1 is a schematic diagram of an automatic analysis device.
[FIG. 2A] FIG. 2A is a configuration diagram of a washing flow path of a dispensing probe.
[FIG. 2B] FIG. 2B is a hardware block diagram of a control unit.
[FIG. 3] FIG. 3 is a diagram illustrating a washing method for the dispensing probe in a first embodiment.
[FIG. 4A] FIG. 4A is a diagram showing a result of a simulation study on an influence of a segmenting air amount on heat dissipation of a heated washing liquid.
[FIG. 4B] FIG. 4B is a diagram showing a result of a simulation study on the influence of the segmenting air amount on the heat dissipation of the heated washing liquid.
[FIG. 4C] FIG. 4C is a diagram showing a result of a simulation study on an influence of the segmenting air amount on the heat dissipation of the heated washing liquid.
[FIG. 4D] FIG. 4D is a diagram showing a result of a simulation study on the influence of the segmenting air amount on the heat dissipation of the heated washing liquid.
[FIG. 4E] FIG. 4E is a diagram showing a result of a simulation study on the influence of the segmenting air amount on the heat dissipation of the heated washing liquid.
[FIG. 4F] FIG. 4F is a diagram showing a result of a simulation study on the influence of the segmenting air amount on the heat dissipation of the heated washing liquid.
[FIG. 5] FIG. 5 is a diagram illustrating a washing method for a dispensing probe in a second embodiment.
[FIG. 6] FIG. 6 is a diagram illustrating a washing method for a dispensing probe in a third embodiment.
[FIG. 7] FIG. 7 is a diagram illustrating a washing method for the dispensing probe in the third embodiment.
[FIG. 8] FIG. 8 is a diagram illustrating a washing method for the dispensing probe in the third embodiment.
[FIG. 9] FIG. 9 is a diagram illustrating a washing method for a dispensing probe in a fourth embodiment.
[FIG. 10] FIG. 10 is a diagram illustrating a washing method for a dispensing probe in a fifth embodiment.
[FIG. 11] FIG. 11 is a diagram illustrating a washing method for a dispensing probe in a sixth embodiment.

### Description of Embodiments

Embodiments of the present invention will be described in detail with reference to the drawings. In the following embodiments, it goes without saying that components (including element steps and the like) are not necessarily essential unless otherwise specified or considered to be obviously essential in theory.

### (First Embodiment)

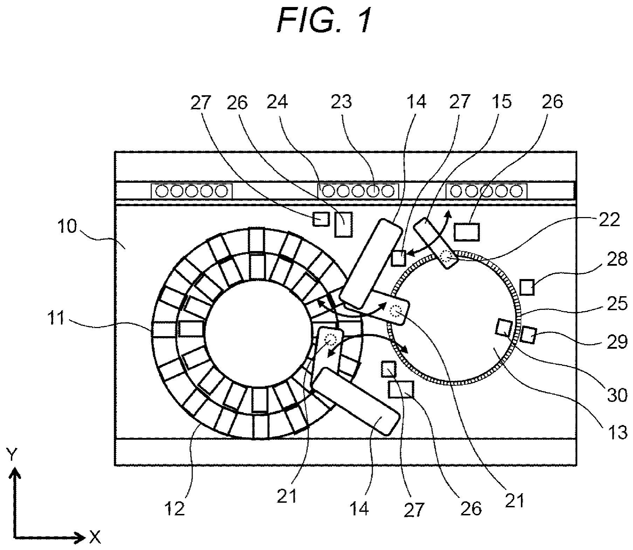

FIG. 1 is a configuration diagram of an automatic analysis device 10 according to a first embodiment. The automatic analysis device 10 includes a reagent disk 12 on which a plurality of reagent containers 11 is mounted, a reaction disk 13 on which a plurality of cells 25 for causing a reaction by mixing a reagent and a sample is mounted, a reagent dispensing probe 21 for aspirating and discharging a reagent, a reagent dispensing mechanism 14 that moves the reagent dispensing probe 21, a sample dispensing probe 22 for aspirating and discharging a sample, and a sample dispensing mechanism 15 that moves the sample dispensing probe 22. Hereinafter, the reagent dispensing probe 21 and the sample dispensing probe 22 are collectively referred to as dispensing probes as appropriate. A reagent and a sample are examples of liquids of the present invention.

A sample put into the automatic analysis device 10 is mounted on a sample rack 24 and carried with the sample being contained in the sample container 23. The plurality of sample containers 23 is mounted on the sample rack 24. Examples of the sample include serum, samples derived from blood such as blood cells and whole blood, and urine.

The sample dispensing mechanism 15 moves the sample dispensing probe 22 to an aspiration position (sample aspiration position) where a sample is aspirated from the sample container 23, a discharge position (sample discharge position) where the sample is discharged to the cell 25, and a washing position where the tip of the sample dispensing probe 22 is washed in a washing tank 26. Further, the sample dispensing mechanism 15 moves the sample dispensing probe 22 to a special washing position where the tip of the sample dispensing probe 22 is washed in a special washing tank 27 more strongly than in the washing tank 26. In the special washing tank 27, physicochemical washing is performed with ultrasonic waves, heating or the like.

Furthermore, the sample dispensing mechanism 15 raises and lowers the sample dispensing probe 22 at the sample aspiration position, the sample discharge position, the washing position, and the special washing position, in accordance with the heights of the sample container 23, the cell 25, the washing tank 26, and the special washing tank 27.

In a similar way, the reagent dispensing mechanism 14 moves the reagent dispensing probe 21 to an aspiration position (reagent aspiration position) where a reagent is aspirated from the reagent container 11, a discharge position (reagent discharge position) where the reagent is discharged to the cell 25, and a washing position where the tip of the reagent dispensing probe 21 is washed in the washing tank 26. The reagent dispensing mechanism 14 moves the reagent dispensing probe 21 to a special washing position where the tip of the sample dispensing probe 22 is more strongly washed in the special washing tank 27 than in the washing tank 26.

Furthermore, the reagent dispensing mechanism 14 raises and lowers the reagent dispensing probe 21 at the reagent aspiration position, the reagent discharge position, the washing position, and the special washing position, in accordance with the heights of the reagent container 11, the cell 25, the washing tank 26, and the special washing tank 27.

The special washing tank 27 is for supplying a heated washing liquid for washing the dispensing probes. In the first embodiment, the washing tank 26 and the special washing tank 27 are disposed in each of the two reagent dispensing probes 21 and sample dispensing probe 22. Note that the washing tank 26 and the special washing tank 27 may be one set of the washing tank 26 and the special washing tank 27 commonly used by the two reagent dispensing probes 21 and the sample dispensing probe 22. Alternatively, one set of the washing tank 26 and the special washing tank 27 may be disposed for being commonly used by the two reagent dispensing probes 21, and one set of the washing tank 26 and the special washing tank 27 may be disposed for being used by the sample dispensing probe 22.

The dispensing probe includes a sensor (for example, a sensor using a change in capacitance or pressure) that detects a liquid level, and it is confirmed by a sensor signal that the dispensing probe has come into contact with a dispensing target solution (sample or reagent). By using the sensor, the contact range can be limited so that the outer surface of the dispensing probe comes into contact with the solution to be dispensed only up to a predetermined height. Thus, an effect of suppressing dispensing variation can also be expected by limiting the range of contact with a dispensing target solution.

Further, when the outer surface of the dispensing probe is washed, washing is performed on a range covering the range in contact with the dispensing target solution. As a result, the dispensing target solution adhering to the outer surface can be reliably removed. However, if the washing range is wider than the dispensing target solution, adhesion of the washing liquid becomes a problem. Therefore, it is desirable to make control so that the washing range is limited to a range that is not wider than the range in contact with the dispensing target solution.

The automatic analysis device 10 analyzes, for example, the concentration of a predetermined component in a sample using the following procedure. First, the sample container 23 carried by the sample rack 24 moves to the sample aspiration position. Next, the sample dispensing probe 22 is moved to the sample aspiration position by the sample dispensing mechanism 15, and aspirates a sample from the sample container 23. Thereafter, the sample dispensing probe 22 is moved to the sample discharge position by the sample dispensing mechanism 15 while the sample is being held in the sample dispensing probe 22, and discharges the sample into the cell 25. Thereafter, the sample dispensing probe 22 is moved to the washing position of the washing tank 26 by the sample dispensing mechanism 15 and washed.

Next, the cell 25 is moved by the reaction disk 13 to the reagent discharge position of the reagent dispensing probe 21. The reagent container 11 is moved to the reagent aspiration position by the reagent disk 12. Thereafter, the reagent dispensing probe 21 is moved to the reagent aspiration position of the reagent container 11 by the reagent dispensing mechanism 14, and aspirates a reagent from the reagent container 11. The reagent dispensing probe 21 is moved to the reagent discharge position by the reagent dispensing mechanism 14 while the reagent is being held in the reagent dispensing probe 21, and discharges the reagent to the cell 25 from which the sample has already been discharged. The cell 25 to which the sample and the reagent have been discharged is rotated by the reaction disk 13, and a stirring mechanism 28 moves to a stirring position where the solution in the cell 25 can be stirred. A mixed liquid of the sample and the reagent in the cell 25 is stirred by the stirring mechanism 28, thereby promoting the reaction between the sample and the reagent in the cell 25. The liquid obtained by the reaction between the sample and the reagent is subjected to photometry using a light source 29 and a photometer 30, thereby analyzing the concentration or the like of a predetermined component in the sample.

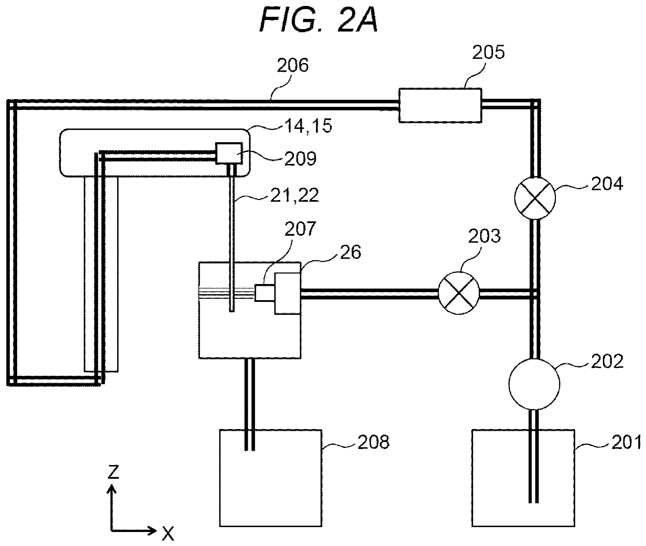

FIG. 2A illustrates a configuration example of a flow path for washing the sample dispensing probe 22 and the reagent dispensing probe 21.

The washing liquid is supplied from a tank 201. From the tank 201 through a tube 206, the washing liquid is pumped by the pump 202. At the tip of the pump 202, an external washing solenoid valve 203, an internal washing solenoid valve 204, and a syringe pump 205 are installed. The external washing solenoid valve 203 is for washing the outer surface of the dispensing probe (hereinafter, may be referred to as external washing). The internal washing solenoid valve 204 is for washing the inner surface of the dispensing probe (hereinafter, may be referred to as internal washing). The syringe pump 205 is for quantitatively aspirating and discharging a sample or a reagent, and a washing liquid or the like with the dispensing probe. The washing tank 26 is installed at the tip of the external washing solenoid valve 203. When the external washing solenoid valve 203 is opened, a washing liquid pumped by the pump 202 is injected to the outer surface of the dispensing probe through a washing nozzle 207 of the washing tank 26. The washing liquid discharged from the dispensing probe and the washing liquid injected to the outer surface of the dispensing probe are drained to a waste liquid tank 208.

When the internal washing solenoid valve 204 is opened, the washing liquid is pumped from the tank 201 by the pump 202 through the syringe pump 205 and the tube 206, and is supplied to the dispensing probe. As a result, the inner surface of the dispensing probe is washed. In a case where the dispensing probe has a material and diameter different from those of the tube, a junction 209 may be provided to connect the dispensing probe and the tube. FIG. 2A illustrates a case where one junction 209 is provided, but a plurality of junctions may be provided to connect a plurality of tubes.

In order to reduce the influence on the sample and the reagent, it is desirable for normal washing to use pure water or a washing liquid (hereinafter, this washing liquid is appropriately referred to as a system liquid) obtained by adding a surfactant having a small interaction with the sample and the reagent to pure water.

The syringe pump 205 can aspirate heated washing liquid supplied from the special washing tank 27 and segmenting air described later into the dispensing probe. The syringe pump 205 is an example of the pump of the present invention.

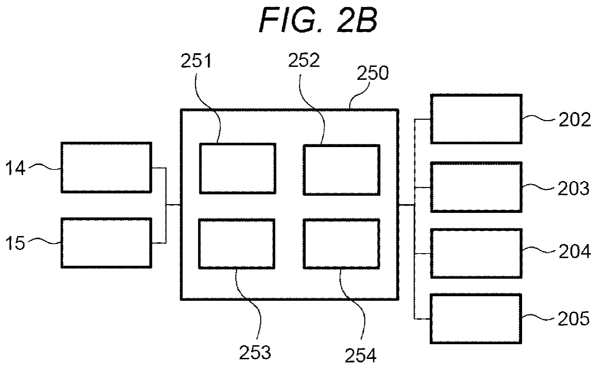

FIG. 2B is a hardware block diagram of a control unit. The control unit 250 controls the operations of the pump 202, the external washing solenoid valve 203, the internal washing solenoid valve 204, and the syringe pump 205. Further, the control unit 250 controls operations of the reagent dispensing mechanism 14 and the sample dispensing mechanism 15.

The control unit 250 includes a processor 251, a main storage unit 252, an auxiliary storage unit 253, and an interface 254. The processor 251 is a central processing unit (CPU), a graphics processing unit (GPU), a digital signal processor (DSP), an application-specific integrated circuit (ASIC), or the like. The main storage unit 252 is a dynamic random access memory (DRAM) or the like, and is used as a work area of the processor 251. The auxiliary storage unit 253 is a hard disk drive (HDD), a solid state drive (SSD), a combination thereof, or the like, and stores various programs and various data. The interface 254 is a device controller or the like that controls the operations of peripheral devices (the pump 202, the external washing solenoid valve 203, internal washing solenoid valve 204, the syringe pump 205, the reagent dispensing mechanism 14, and the sample dispensing mechanism 15) connected to the control unit 250.

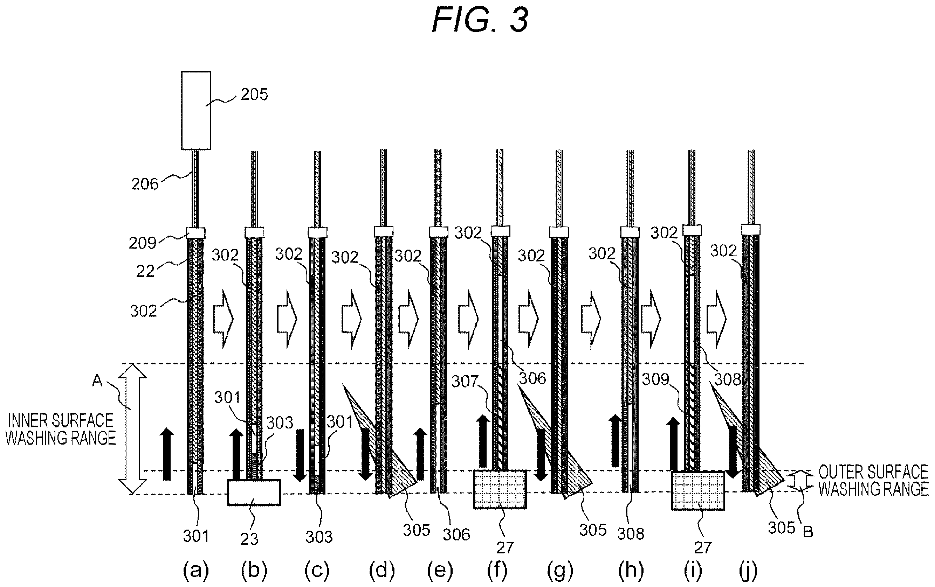

When the liquid (sample or reagent) is aspirated into the dispensing probe by controlling the operation of the syringe pump 205, the control unit 250 aspirates, into the dispensing probe, first segmenting air (segmenting air 301 in FIG. 3) for segmenting the system liquid filled in the dispensing probe and a liquid, and aspirates the liquid into the dispensing probe following the first segmenting air. Further, when the heated washing liquid is aspirated into the dispensing probe by controlling the operation of the syringe pump 205, the control unit 250 aspirates second segmenting air (segmenting air 306 in FIG. 3) into the dispensing probe. The second segmenting air, which is greater in amount than the first segmenting air, is for segmenting the system liquid filled in the dispensing probe and the heated washing liquid. The control unit 250 further aspirates the heated washing liquid into the dispensing probe following the second segmenting air.

Next, the operation of the device for aspirating and discharging the sample, the reagent, and the washing liquid will be described with reference to FIG. 3. Hereinafter, a washing method for the dispensing probe will be described using the sample dispensing probe 22 as an example. Since the washing method for the reagent dispensing probe 21 is approximately similar to the washing method for the sample dispensing probe 22, the description thereof will be omitted.

First, the inside of the sample dispensing probe 22 and the inside of the tube 206 are filled with pure water or a washing liquid (system liquid) obtained by adding a surfactant to pure water as described above. The sample dispensing probe 22 is desirably filled up to its tip with the system liquid 302. At this time, the internal washing solenoid valve 204 is in a closed state.

From this state, air indicated by 301 is aspirated by the syringe pump 205 (FIG. 3(a)). This air is referred to as segmenting air 301. The segmenting air 301 is an example of the first segmenting air of the present invention.

Next, after the aspiration of the segmenting air 301, the sample dispensing probe 22 is moved to the sample aspiration position by the sample dispensing mechanism 15, and aspirates a sample 303 from the sample container 23 (FIG. 3(b)).

Thereafter, the sample dispensing probe 22 moves while holding the sample 303 therein, and discharges the sample into the cell 25 (FIG. 3(c)). At the time of discharging the sample 303, the entire sample 303 may be discharged, or the discharge may be ended with a part of the sample being held in the sample dispensing probe 22.

Thereafter, the sample dispensing probe 22 is moved to the washing tank 26 by the sample dispensing mechanism 15 and washed (FIG. 3(d)). At this time, in the washing of the outer surface, washing is performed using the washing liquid 305 on a range covering a range in contact with the dispensing target solution (sample). As a result, the dispensing target solution adhering to the outer surface or its component can be reliably removed. However, if the washing range is wider than the dispensing target solution, adhesion of the washing liquid 305 becomes a problem. Therefore, it is desirable to make control so that the washing range is limited to a range that is not wider than the range in contact with the dispensing target solution.

The following will describe a device operation for washing the sample dispensing probe 22 in the special washing tank 27 for washing the sample dispensing probe more strongly than in the normal washing tank 26. Here, a washing tank for supplying a heated washing liquid is considered as the special washing tank 27. The heated washing liquid may be pure water described above, a washing liquid obtained by adding a surfactant to pure water, an alkaline or acidic washing liquid, or a washing liquid obtained by adding a surfactant to the alkaline or acid washing liquid.

Similarly to the above, the inside of the sample dispensing probe 22 and the inside of the tube 206 are filled with the system liquid of the tank 201. At this time, the sample dispensing probe 22 is desirably filled up to the tip with the system liquid in the tank 201. Further, the internal washing solenoid valve 204 is in a closed state. From this state, the sample dispensing probe 22 aspirates the segmenting air 306 with the syringe pump 205 (FIG. 3(e)). The segmenting air 306 is an example of the second segmenting air of the present invention. The amount of segmenting air 306 is greater than the amount of the segmenting air 301.

After the aspiration of the segmenting air 306, the sample dispensing probe 22 is moved to the special washing tank 27 by the sample dispensing mechanism 15. A heated washing liquid 307 is supplied from the special washing tank 27. The sample dispensing probe 22 is immersed in the heated washing liquid in the special washing tank 27, and the heated washing liquid 307 is aspirated by the syringe pump 205 in a state where the internal washing solenoid valve 204 is closed (FIG. 3(f)).

At this time, the range where the outer surface of the sample dispensing probe 22 is also immersed in the heated washing liquid is simultaneously washed. As the washing range, similarly to the washing in the washing tank 26 described above, washing is performed on a range covering a range in contact with the dispensing target solution (sample 303). As a result, the dispensing target solution adhering to the outer surface or its component can be reliably removed. However, if the washing range is wider than the dispensing target solution, adhesion of the washing liquid becomes a problem. Therefore, it is desirable to make control so that the washing range is limited to a range that is not wider than the range in contact with the dispensing target solution.

The first embodiment describes a case where a washing range A of the inner surface is wider than a washing range B of the outer surface. The washing range A of the inner surface is determined based on the assumed maximum aspiration amount of the sample or the reagent in consideration of aspiration with an amount sufficient to cover the washing range A. In addition, the washing range A of the inner surface may be determined based on the maximum aspiration amount in the history of the past amounts of the sample and the reagent aspirated so far in consideration of aspiration of a sufficient amount to cover the washing range A.

Thereafter, the sample dispensing probe 22 is moved to the washing tank 26 by the sample dispensing mechanism 15, and the heated washing liquid 307 is quantitatively discharged by being pushed out by the syringe pump 205. Thus, the sample dispensing probe 22 is washed by the washing liquid 305 (FIG. 3(g)). Note that the heated washing liquid 307 may be discharged to the washing tank 26 or may be discharged to the special washing tank 27.

Next, the sample dispensing probe 22 aspirates segmenting air 308 (FIG. 3(h)). The amount of the segmenting air 308 is greater than the amount of the segmenting air 301. Note that the amount of the segmenting air 308 may be greater or smaller than the amount of the segmenting air 301. Further, the amount of the segmenting air 308 may be greater or smaller than the amount of the segmenting air 306.

Thereafter, the sample dispensing probe 22 is moved again to the special washing tank 27 by the sample dispensing mechanism 15. In the similar way described above, a heated washing liquid 309 is supplied from the special washing tank 27. The sample dispensing probe 22 is immersed in the heated washing liquid 309, and the heated washing liquid 309 is aspirated by the syringe pump 205 in a state where the internal washing solenoid valve 204 is closed (FIG. 3(i)). The heated washing liquid 309 is generally the same as the heated washing liquid 307 aspirated earlier, but may be a different washing liquid. In the first embodiment, the heated washing liquid has been aspirated and discharged twice, but the heated washing liquid may be aspirated and discharged once or three or more times.

Thereafter, the sample dispensing probe 22 is moved to the washing tank 26 by the sample dispensing mechanism 15 and washed with the washing liquid 305 in the similar way described above (FIG. 3(j)). The washing in the washing tank 26 may be performed once or repeatedly.

As described above, when the sample dispensing probe 22 is washed in the special washing tank 27 using the heated washing liquids 307 and 309, it is important for improving the washing effect to keep the temperatures of the heated washing liquids 307 and 309 as high as possible, that is, to prevent the temperatures from dropping due to heat dissipation.

The amount of the segmenting air 306 and 308 at a time of aspirating the heated washing liquids 307 and 309 is desirably larger than the amount of the segmenting air 301 at a time of aspirating the sample 303. This is because the larger the amount of the segmenting air, the more the heated washing liquids 307 and 309 can be prevented from coming into contact with the system liquid 302 filled in the dispensing probe. It may be difficult to control the temperature of the system liquid 302 supplied from the tank 201. In such a case, the temperature of the system liquid 302 is strongly affected by the outside air temperature. Therefore, in a case where the outside air temperature is low, heat dissipation may occur in the heated washing liquids 307 and 309 due to contact with the system liquid 302. Further, when the system liquid 302 supplied from the tank 201 moves on the inner surface of the dispensing probe, it is conceivable that a small amount of the system liquid adheres to and remains on the inner wall surface of the dispensing probe. As a result, the washing liquid adhering to the inner wall surface of the dispensing probe and the heated washing liquid are mixed, and thus the temperature of the heated washing liquid may drop.

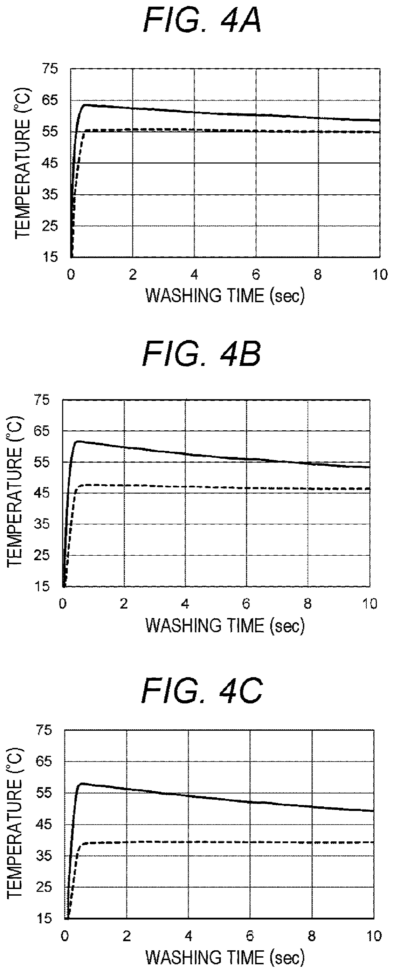

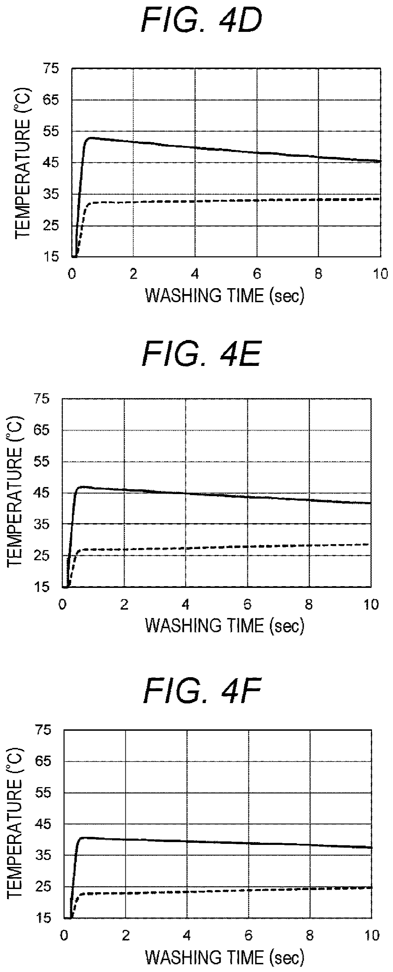

FIGS. 4A to 4F show results of simulation studies on the influence of the amount of segmenting air on heat dissipation. FIGS. 4A to 4F show temperature changes of the inner wall surface of the dispensing probe at a time when the heated washing liquid is aspirated by the dispensing probe. FIGS. 4A to 4F show results of monitoring temperatures at different height positions of the dispensing probe. The height positions where the temperature has been monitored are closer to the tip of the dispensing probe in the order of FIGS. 4A to 4F. That is, FIG. 4A shows a result of monitoring at a position closest to the tip of the dispensing probe. FIG. 4F shows a result of monitoring at a position farthest from the tip of the dispensing probe.

In this simulation, evaluations were performed in two cases including a case where the amount of the segmenting air is 0 and a case where the inside of the dispensing probe is entirely filled with air. In FIGS. 4A to 4F, the temperature change in a case where the amount of the segmenting air is set to 0 is indicated by a broken line, and the temperature change in a case where the inside of the dispensing probe is entirely filled with air is indicated by a solid line.

In all of FIGS. 4A to 4F, it can be seen that the temperature of the solid line (in the case where the inside of the dispensing probe is entirely filled with air) is higher than the temperature of the broken line (in the case where the amount of the segmenting air is 0). This is considered to be because, as described above, the effect of heat dissipation could be reduced by adjusting the amount of the segmenting air to prevent the heated washing liquid from coming into contact with the low-temperature system liquid 302 supplied from the tank 201.

As illustrated in FIGS. 4A to 4F, by increasing the amount of the segmenting air 306 and 308 at the time of aspirating the heated washing liquids 307 and 309 with respect to the amount of the segmenting air 301 at the time of aspirating the sample 303, the heat insulation effect can be enhanced, and the temperatures of the heated washing liquids 307 and 309 can be maintained in a high state.

### (Second Embodiment)

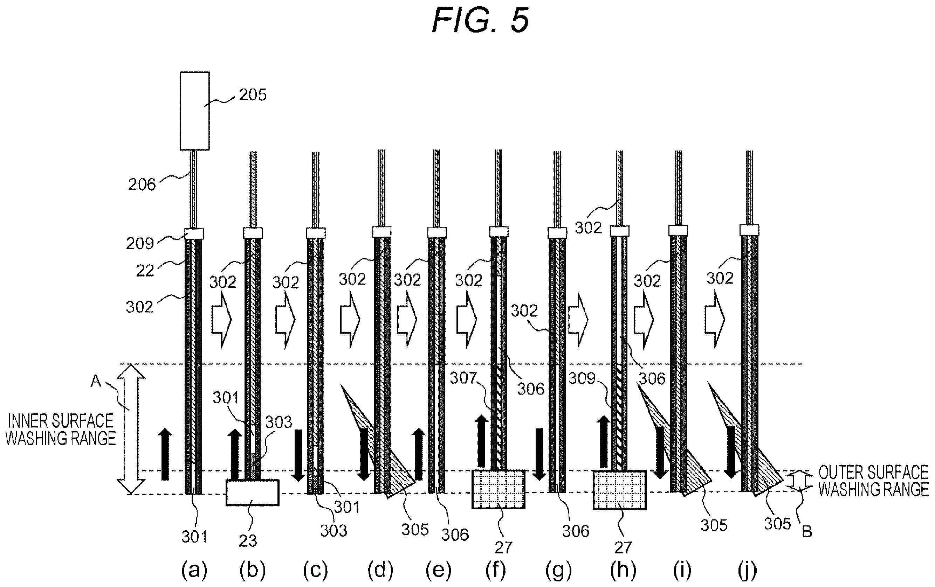

In addition, the amount of segmenting air is desirably great enough to fill the washing range of the inner surface of the dispensing probe. An example of this case is illustrated in FIG. 5. Since a device configuration in the second embodiment is similar to that in the first embodiment, the description thereof will be omitted. Since FIGS. 5(a) to 5(d) are similar to FIGS. 3(a) to 3(d) of the first embodiment, the description thereof will be omitted.

The sample dispensing probe 22 aspirates the segmenting air 306 to fill the washing range A of the inner surface of the sample dispensing probe 22 (FIG. 5(e)).

Thereafter, the sample dispensing probe 22 is moved to the special washing tank 27 by the sample dispensing mechanism 15. The sample dispensing probe 22 aspirates the heated washing liquid 307 to fill the washing range A of the inner surface of the sample dispensing probe 22 (FIG. 5(f)). The inner surface of the sample dispensing probe 22 is washed with the heated washing liquid 307.

Thereafter, the sample dispensing probe 22 is moved to the washing tank 26 by the sample dispensing mechanism 15. Here, the sample dispensing probe 22 quantitatively discharges the heated washing liquid 307 by pushing-out using the syringe pump 205 (FIG. 5(g)). With this operation, the segmenting air 306 again fills the washing range A of the inner surface, and the system liquid 302 does not come in contact with the inner surface of the sample dispensing probe 22 in the washing range A. This can prevent a drop in the temperature of the washing range A of the inner surface. In the first embodiment, the sample dispensing probe 22 was subjected to internal washing and external washing. However, from the viewpoint of preventing the contact with the system liquid 302, it is conceivable not to perform the internal washing and external washing.

The sample dispensing probe 22 is then moved to the special washing tank 27 by the sample dispensing mechanism 15. The sample dispensing probe 22 again aspirates (FIG. 5(h)) and discharges the heated washing liquid 309.

Thereafter, the sample dispensing probe 22 is rotationally moved to the washing tank 26 by the sample dispensing mechanism 15, and internal washing and external washing are performed (FIGS. 5(i) and 5(j)). At this time, by repeatedly performing the internal washing and the external washing in the washing tank 26 a plurality of times, processing for reducing the remaining amounts of the heated washing liquids 307 and 309 adhering to the sample dispensing probe 22 may be performed.

### (Third Embodiment)

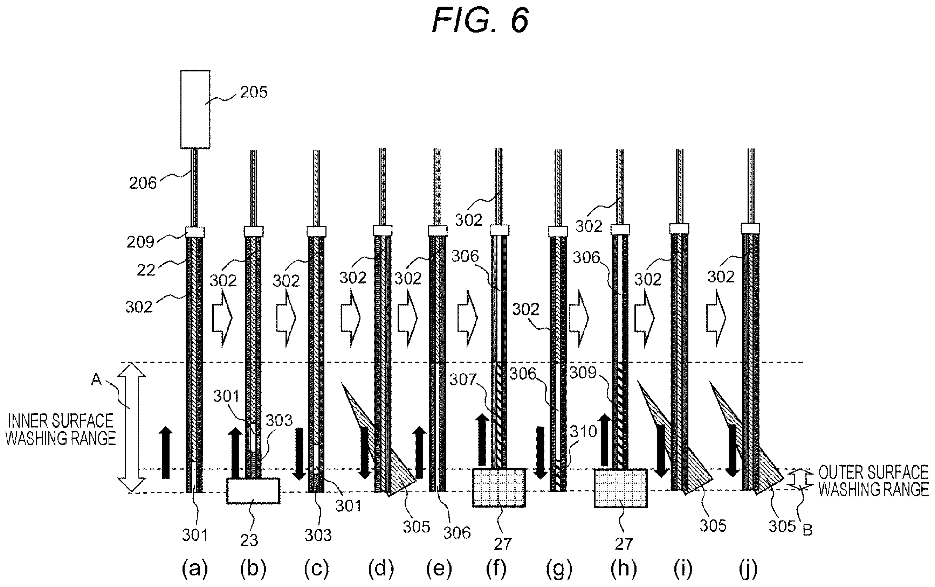

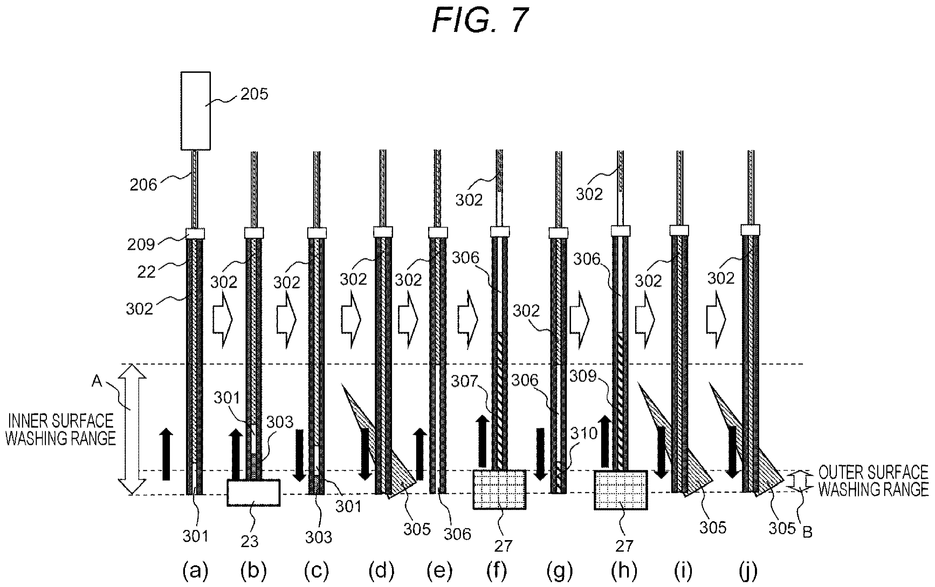

Further, when the heated washing liquid 307 is discharged, a part of the heated washing liquid 307 remains in the sample dispensing probe 22. This can prevent contact with the outside air and reduce a temperature drop due to heat dissipation. An example of a washing method for a dispensing probe in a third embodiment is illustrated in FIGS. 6 and 7. Since a device configuration in the third embodiment is similar to that in the first embodiment, the description thereof will be omitted. Since FIGS. 6(a) to 6(e) and FIGS. 7(a) to 7(f) are similar to FIGS. 5(a) to 5(f) in the second embodiment, the description thereof will be omitted. Note that the amount of the segmenting air 306 to be aspirated into the dispensing probe in the third embodiment may be similar that in the first embodiment.

The steps up to the aspiration operation of the heated washing liquid 307 (FIGS. 6(a) to 6(f) and FIGS. 7(a) to 7(f)) are similar to those in FIGS. 5 (a) to 5 (f). In the aspiration of the heated washing liquid 307, the washing range A of the inner surface may be filled with the heated washing liquid 307, the heated washing liquid 307 may be aspirated in a larger amount. FIG. 7 (FIG. 7(f)) illustrates an example of a case where a heated washing liquid whose amount exceeds the washing range of the inner surface is aspirated.

Thereafter, the sample dispensing probe 22 is moved to the washing tank 26 by the sample dispensing mechanism 15. Here, the sample dispensing probe 22 quantitatively discharges the heated washing liquid 307 by pushing-out with the syringe pump 205 (FIGS. 6(g) and 7(g)). In the second embodiment illustrated in FIG. 5, the heated washing liquid 307 is entirely discharged to the outside of the sample dispensing probe 22, but in the third embodiment, a heated washing liquid 310 as a part of the heated washing liquid 307 remains in the sample dispensing probe 22. That is, the control unit 250 causes the syringe pump to discharge the remaining heated washing liquid with a part of the heated washing liquid in the dispensing probe remaining in the dispensing probe. This can prevent contact between the inner surface of the sample dispensing probe 22 and the outside air, and keep the inside of the sample dispensing probe 22 warm.

Thereafter, the sample dispensing probe 22 is rotationally moved by the sample dispensing mechanism 15 to the special washing tank 27. Here, the sample dispensing probe 22 aspirates the heated washing liquid 309 (FIGS. 6(h) and 7(h)). In the similar way described above, in the aspiration of the heated washing liquid 309, the washing range A of the inner surface may be filled with the heated washing liquid 309, or the heated washing liquid 307 may be aspirated in a larger amount. This example is illustrated in FIG. 7(h).

After being washed again, the sample dispensing probe 22 is moved to the washing tank 26 by the sample dispensing mechanism 15, and is subject to the internal washing and the external washing (FIGS. 6(i) and 6(j) and FIGS. 7(i) and 7(j)).

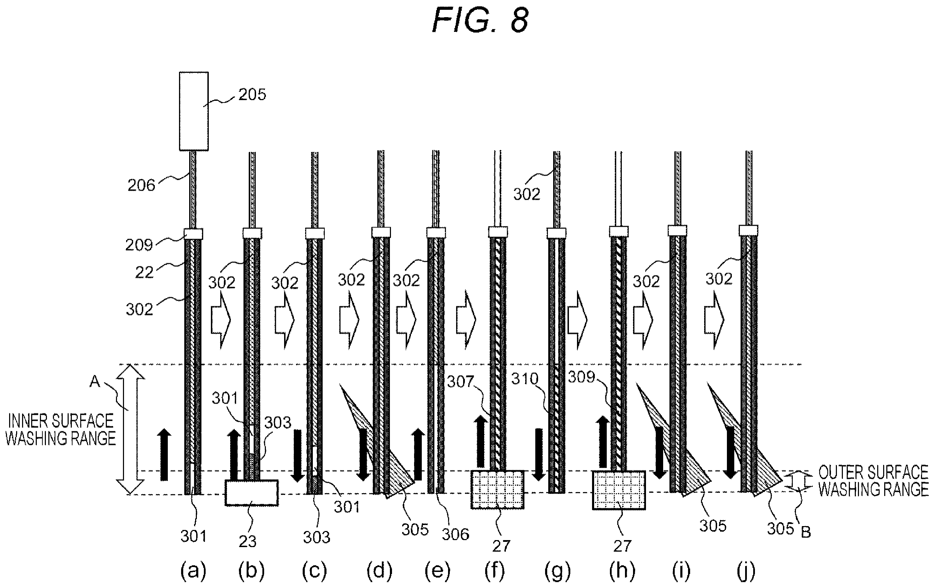

Furthermore, as illustrated in FIG. 8, by setting the amount of the heated washing liquid 310 remaining in the sample dispensing probe 22 to fill the washing range A of the inner surface (FIG. 8(g)), the heated washing liquid 310 is in a state of being constantly in contact with the washing range A of the inner surface. Thus, further improvement in washing efficiency can be expected.

### (Fourth Embodiment)

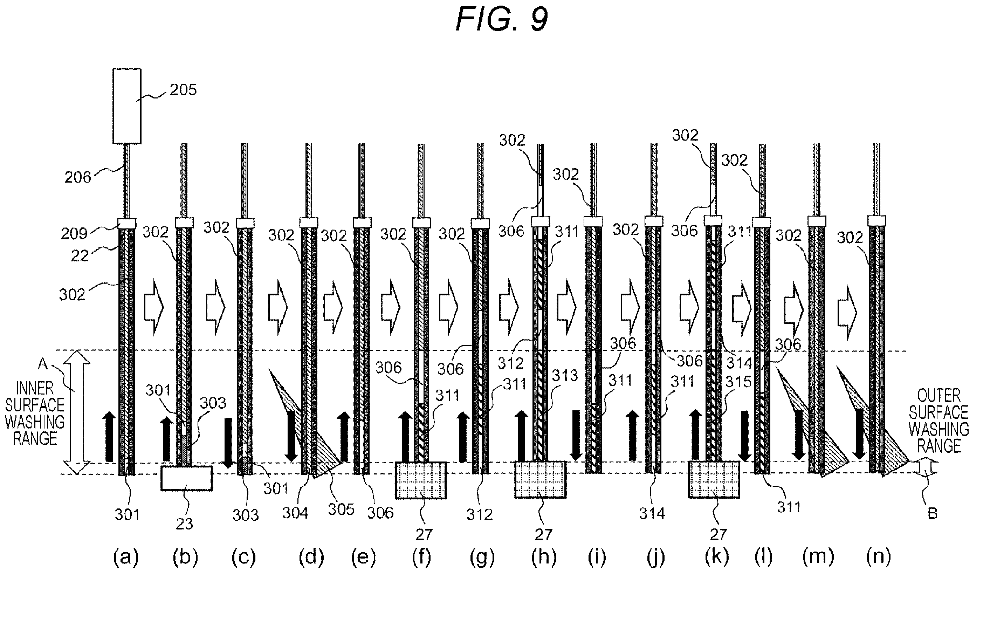

In a fourth embodiment, as illustrated in FIG. 9, the inside of the sample dispensing probe 22 is preliminarily heated by aspirating a heated washing liquid in multiple stages. This can remove the system liquid 302 remaining on the inner wall surface, and more efficient washing can be expected.

Steps up to the aspiration of the segmenting air 306 with the sample dispensing probe 22 (FIGS. 9(a) to 9(e)) are similar to FIGS. 3(a) to 3(e) in the first embodiment. Thereafter, the sample dispensing probe 22 is moved to the special washing tank 27 by the sample dispensing mechanism 15. Here, the sample dispensing probe 22 aspirates a heated washing liquid 311 (FIG. 9(f)).

Thereafter, the sample dispensing probe 22 is moved to the washing tank 26 by the sample dispensing mechanism 15 and aspirates segmenting air 312 (FIG. 9(g)). The segmenting air 312 is an example of the third segmenting air of the present invention. At this time, by making the amount of the segmenting air 312 larger than a difference between the washing range A of the inner surface and a heated washing liquid 313, the heated washing liquid 313 can pass through the washing range A of the inner surface. This can remove the system liquid 302 remaining on the inner wall surface of the sample dispensing probe 22, and heat the sample dispensing probe 22 itself.

Thereafter, the sample dispensing probe 22 is moved to the special washing tank 27 by the sample dispensing mechanism 15. Here, the sample dispensing probe 22 aspirates the heated washing liquid 313 to fill the washing range A of the inner surface (FIG. 9(h)). Since the inner surface of the sample dispensing probe 22 is preheated by the heated washing liquid 313 and the system liquid 302 has also been removed, heat dissipation of the heated washing liquid 313 can be prevented, and washing can be performed more efficiently.

The sample dispensing probe 22 then discharges the heated washing liquid 313 (FIG. 9(i)) and aspirates the segmenting air 314 (FIG. 9(j)). Further, the sample dispensing probe 22 aspirates a new heated washing liquid 315 (FIG. 9(k)).

The sample dispensing probe 22 is moved to the washing tank 26 by the sample dispensing mechanism 15, and discharges the heated washing liquids 311 and 315 (FIG. 9(1)) to be subject to the internal washing and external washing (FIGS. 9(m) and 9(n)).

### (Fifth Embodiment)

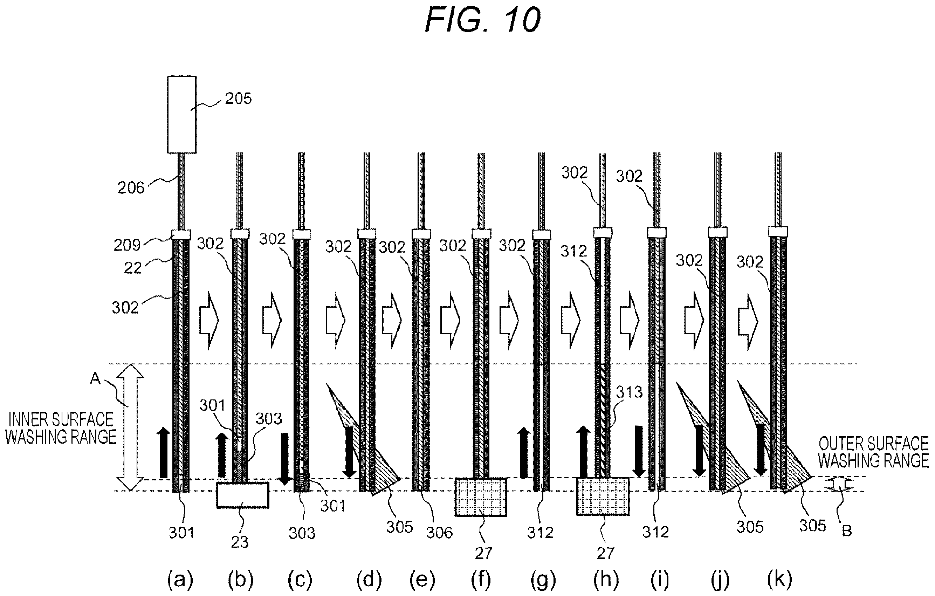

In a fifth embodiment, as illustrated in FIG. 10, the system liquid 302 at the tip of the sample dispensing probe 22 is heated in the special washing tank 27, and the segmenting air and the heated washing liquid are aspirated. That is, the control unit 250 causes the syringe pump 205 to heat the system liquid in the dispensing probe in the special washing tank 27, then aspirate the second segmenting air (segmenting air 312) into the dispensing probe, and subsequently aspirate the heated washing liquid 313. Accordingly, heat-washing can be expected to be efficiently performed.

Similarly to FIGS. 5(a) to 5(d) in the second embodiment, the sample dispensing probe 22 aspirates the segmenting air 301 (FIG. 10(a)), aspirates and discharges the sample 303 (FIGS. 10(b) and 10(c)), and is subject to internal washing and external washing (FIG. 10(d)).

Thereafter, the sample dispensing probe 22 does not aspirate the segmenting air, and is filled with the system liquid 302 up to the tip of the sample dispensing probe 22 (FIG. 10(e)).

Thereafter, the sample dispensing probe 22 is moved to the special washing tank 27 by the sample dispensing mechanism 15. Here, the system liquid 302 in the sample dispensing probe 22 is heated by coming into contact with the heated washing liquid of the special washing tank 27 (FIG. 10(f)).

The sample dispensing probe 22 is moved by the sample dispensing mechanism 15 and aspirates segmenting air 312 (FIG. 10(g)). At this time, the amount of the segmenting air 312 is larger than the amount of the segmenting air 301 at the time of the aspiration of the sample, and may be an amount sufficient to fill the washing range A of the inner surface if possible.

Thereafter, the sample dispensing probe 22 is moved to the special washing tank 27 by the sample dispensing mechanism 15 and aspirates the heated washing liquid 313 (FIG. 10(h)). The sample dispensing probe 22 is then moved to the washing tank 26 by the sample dispensing mechanism 15, and discharges the heated washing liquid 313 (FIG. 10(i)) to be subject to the internal washing and external washing (FIGS. 10(j) and 10(k)).

FIG. 10 illustrates an example where the system liquid 302 is heated in the special washing tank 27 without aspirating the segmenting air. However, in the fifth embodiment, the segmenting air may be aspirated, then the segmenting air and the system liquid 302 may be discharged in the special washing tank 27, and after the tip of the sample dispensing probe 22 is filled with the system liquid, the system liquid 302 may be heated in the special washing tank 27. This makes it possible to prevent dripping from the tip of the sample dispensing probe 22 when the sample dispensing probe 22 moves to the special washing tank 27.

### (Sixth Embodiment)

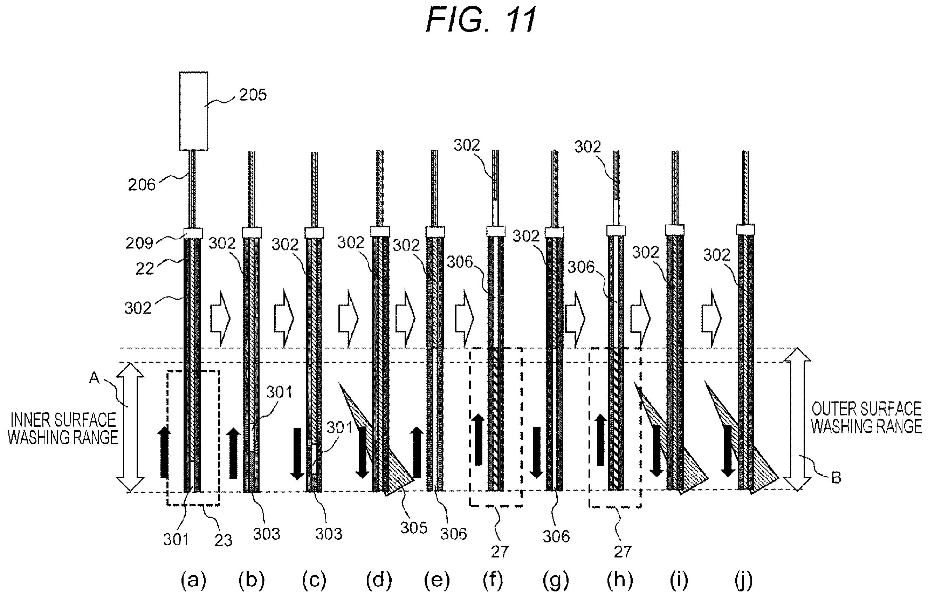

The above first to fifth embodiments have described the case where the height of the washing range of the outer surface is smaller than the washing range of the inner surface. However, in practice, the washing range B of the outer surface may be larger than the washing range A of the inner surface. The example of this case is illustrated in FIG. 11.

In a sixth embodiment, the control unit 250 causes the syringe pump 205 to aspirate the second segmenting air (the segmenting air 306) up to a region higher than the height of the washing range B of the outer surface. As described above, in the sixth embodiment, it can be expected that the sample dispensing probe 22 can be washed with higher washing efficiency by aspirating the segmenting air 306 in a larger amount than a range that covers the washing range A of the inner surface, that is, aspirating the segmenting air 306 that fills the washing range B of the outer surface (FIG. 11(e)). In the sixth embodiment, the washing with a heated washing liquid is repeatedly performed (FIGS. 11(e), 11(f), 11(g), and 11(h)), and internal washing and external washing are performed (FIGS. 11(i) and 11(j)).

### (Modified Example)

Note that the present invention is not limited to the above-described embodiments, and includes various modifications. The above embodiments have been described in detail for easy understanding of the present invention, and are not necessarily limited to those having all the described configurations. Further, a part of the configuration in one embodiment can be replaced with the configuration in another embodiment, and the configuration in another embodiment can be added to the configuration in one embodiment. In addition, another configuration can be added to and deleted from a part of the configuration in each embodiment, and a part of the configuration in each embodiment can be replaced with another configuration.

For example, the controller 250 may cause the syringe pump 205 to adjust the amount of the second segmenting air (segmenting air 306) so that the heated washing liquid 307 does not exceed the junction 209 connecting the dispensing probe and the tube 206.

In the above embodiments, the washing method for the sample dispensing probe 22 has been described, but the washing method of the present invention is also applicable to the reagent dispensing probe 21.

The control unit 250 may control the operation of the syringe pump 205 with reference to a parameter X indicating the amount of the segmenting air 301 and a parameter Y (Y is a number greater than X) indicating the amount of the segmenting air 306. Further, the control unit 250 may control the operation of the syringe pump 205 with reference to the parameter X indicating the amount of the segmenting air 301 and a parameter (X+α) (however, α is a positive number) indicating the amount of the segmenting air 306.

### Reference Signs List

10 automatic analysis device
11 reagent container
12 reagent disk
13 reaction disk
14 reagent dispensing mechanism
15 sample dispensing mechanism
21 reagent dispensing probe
22 sample dispensing probe
23 sample container
24 sample rack
25 cell
26 washing tank
27 special washing tank
28 stirring mechanism
29 light source
30 photometer
201 tank
202 pump
203 external washing solenoid valve
204 internal washing solenoid valve
205 syringe pump
206 tube
207 washing nozzle
208 waste liquid tank
209 junction
250 control unit
251 processor
252 main storage unit
253 auxiliary storage unit
254 interface
301 segmenting air
302 system liquid
303 sample
305 washing liquid
306 segmenting air
307 heated washing liquid
308 segmenting air
309 heated washing liquid
310 heated washing liquid
311 heated washing liquid
312 segmenting air
313 heated washing liquid
314 segmenting air
315 heated washing liquid

## Claims

1. An automatic analysis device comprising:
a dispensing probe configured to aspirate a liquid;
a washing tank configured to supply a heated washing liquid;
a pump configured to aspirate the liquid and the heated washing liquid into the dispensing probe; and
a control unit that controls an operation of the pump, wherein the control unit causes the pump to
aspirate first segmenting air into the dispensing probe when aspirating the liquid into the dispensing probe, the first segmenting air segmenting a system liquid filled in the dispensing probe and the liquid and aspirate the liquid into the dispensing probe following the first segmenting air; and
aspirate second segmenting air into the dispensing probe when aspirating the heated washing liquid into the dispensing probe, the second segmenting air being larger in amount than the first segmenting air, the second segmenting air segmenting the system liquid filled in the dispensing probe and the heated washing liquid, and aspirate the heated washing liquid into the dispensing probe following the second segmenting air.

2. The automatic analysis device according to claim 1, wherein
the second segmenting air aspirated into the dispensing probe is equal to or larger in amount than a washing range of an inner surface of the dispensing probe.

3. The automatic analysis device according to claim 1, wherein
the control unit causes the pump to discharge a remainder of the heated washing liquid with a part of the heated washing liquid in the dispensing probe remaining in the dispensing probe.

4. The automatic analysis device according to claim 3, wherein
the part of the heated washing liquid remaining in the dispensing probe is equal to or larger in amount than a washing range of an inner surface of the dispensing probe.

5. The automatic analysis device according to claim 1, wherein
the control unit causes the pump to aspirate third segmenting air into the dispensing probe when aspirating an additional heated washing liquid different from the heated washing liquid into the dispensing probe, the third segmenting air segmenting the heated washing liquid in the dispensing probe and the additional heated washing liquid, and aspirate the additional heated washing liquid into the dispensing probe following the third segmenting air.

6. The automatic analysis device according to claim 5, wherein
the additional heated washing liquid is equal to or larger in amount than a washing range of an inner surface of the dispensing probe.

7. The automatic analysis device according to claim 1, wherein
the control unit causes the pump to aspirate, after heating the system liquid in the dispensing probe in the washing tank, the second segmenting air into the dispensing probe, and aspirate the heated washing liquid into the dispensing probe following the second segmenting air.

8. The automatic analysis device according to claim 1, wherein
the control unit causes the pump to aspirate the second segmenting air up to a region higher than a height of a washing range of an outer surface of the dispensing probe in a case where the height of the washing range of the outer surface is higher than a height of a washing range of an inner surface.

9. The automatic analysis device according to claim 1, wherein
the control unit causes the pump to adjust an amount of the second segmenting air so that the heated washing liquid does not exceed a junction connecting the dispensing probe and a tube for supplying the system liquid to the dispensing probe.

10. The automatic analysis device according to claim 1, wherein
an aspiration amount of the heated washing liquid is determined depending on a history of a past aspiration amount of the liquid.

11. A washing method for a dispensing probe, comprising:
filling a dispensing probe for aspirating a liquid with a system liquid;
aspirating first segmenting air into the dispensing probe, the first segmenting air segmenting the system liquid filled in the dispensing probe and the liquid;
aspirating the liquid into the dispensing probe following the first segmenting air;
discharging the liquid in the dispensing probe;
aspirating second segmenting air into the dispensing probe, the second segmenting air being larger in amount than the first segmenting air, the second segmenting air segmenting the system liquid filled in the dispensing probe and a heated washing liquid; and
aspirating the heated washing liquid into the dispensing probe following the second segmenting air.

12. The washing method for a dispensing probe according to claim 11, wherein
the second segmenting air aspirated into the dispensing probe is equal to or larger in amount than a washing range of an inner surface of the dispensing probe.

13. The washing method for a dispensing probe according to claim 11, further comprising
discharging a remainder of the heated washing liquid with a part of the heated washing liquid being left in the dispensing probe.

14. The washing method for a dispensing probe according to claim 13, wherein
the part of the heated washing liquid remaining in the dispensing probe is equal to or larger in amount than a washing range of an inner surface of the dispensing probe.

15. The washing method for a dispensing probe according to claim 11, further comprising:
aspirating third segmenting air into the dispensing probe, the third segmenting air segmenting the heated washing liquid in the dispensing probe and an additional heated washing liquid; and
aspirating the additional heated washing liquid into the dispensing probe following the third segmenting air.

16. The washing method for a dispensing probe according to claim 15, wherein
the additional heated washing liquid is equal to or larger in amount than a washing range of an inner surface of the dispensing probe.

17. The washing method for a dispensing probe according to claim 11, further comprising
heating, after discharging the liquid in the dispensing probe, the system liquid in the dispensing probe in a washing tank for supplying the heated washing liquid.

18. The washing method for a dispensing probe according to claim 11, wherein
when the second segmenting air is aspirated into the dispensing probe, the second segmenting air is aspirated up to a region higher than a height of a washing range of an outer surface in a case where the height of the washing range of the outer surface of the dispensing probe is higher than a height of a washing range of an inner surface.

19. The washing method for a dispensing probe according to claim 11, further comprising
adjusting an amount of the second segmenting air so that the heated washing liquid does not exceed a junction connecting the dispensing probe and a tube for supplying the system liquid to the dispensing probe.

20. The washing method for a dispensing probe according to claim 11, further comprising
determining an aspiration amount of the heated washing liquid depending on a history of a past aspiration amount of the liquid.
